# EUROPEAN PATENT APPLICATION

(11) **EP 4 398 213 A1**
(43) Date of publication of application: **10.07.2024**
(21) Application number: 23150311.1
(22) Date of filing: 04.01.2023
(51) Int. Cl.: G08G 1/01, G08G 1/0967, G01C 21/36, G01W 1/00, G01W 1/10, G08G 1/0962

(54) **SYSTEM FOR DETERMINING WEATHER CONDITIONS IN REAL-TIME, VEHICLE COMPRISING A SYSTEM AND METHOD FOR DETERMINING WEATHER CONDITIONS**

(71) Applicant: Volvo Car Corporation, 405 31 Göteborg (SE)
(72) Inventor: JOHANSSON, Patrik, 40531 Göteborg (SE); YANG, Derong, 40531 Göteborg (SE); KALLIO, Kai, 40531 Göteborg (SE)
(74) Representative: Maiwald GmbH

(57) **Abstract**

The disclosure relates to a system (50) for determining weather conditions in real-time, a vehicle (10) comprising a system, the use of a system (50) for collecting at least one data set and/or determining at least one weather condition or for managing a fleet (20) having a plurality of vehicles (10), a method for determining weather conditions and a computer program element. The system comprises at least one sensor (100), which is arrangeable at the vehicle (10) and configured to detect at least one data set, and an interface (200) having an evaluation unit. The evaluation unit of the interface is configured to receive the at least one data set and/or, based on the at least one data set, to determine at least one weather condition surrounding the vehicle (10). The interface (200) is configured to visualize the at least one data set and/or the at least one weather condition surrounding the vehicle (10).

## Description

The present disclosure relates to a system for determining weather conditions in real-time, a vehicle comprising such a system, the use of such a system for collecting at least one data set and/or determining at least one weather condition, the use of such a system for managing a fleet having a plurality of vehicles, a method for determining weather conditions and a computer program element.

Weather conditions are one of important factors in road safety for driving vehicles. Conventionally, stationary weather stations provide weather data with a spatial resolution in the order of one or more kilometers and at an updating frequency in the order of several ten minutes or hours. As in modem vehicles, especially in battery electric vehicles, sensors of various types may be increasingly equipped for gathering information about the performance of the vehicle and the surroundings, a system for providing more safety-relating information including the weather information may be developed based on new sensing technologies of the vehicles.

It is an objective of the present disclosure to provide an improved weather monitoring system for a vehicle.

The problem is at least partially solved or alleviated by the subject matter of the independent claims of the present disclosure, wherein further examples are incorporated in the dependent claims.

According to a first aspect, there is provided a system for determining weather conditions in real-time for a vehicle of a fleet. The system comprises at least one sensor and an interface that comprises an evaluation unit. The at least one sensor is arrangeable at the vehicle and configured to detect at least one data set. The evaluation unit of the interface is configured to receive the at least one data set of the at least one sensor. Alternatively and additionally, the evaluation unit of the interface is further configured to determine at least one weather condition surrounding the vehicle based on the at least one data set. The interface is configured to visualize the at least one data set and/or the at least one weather condition surrounding the vehicle.

The fleet may comprise a plurality of vehicles. The at least one sensor may be provided for each of the plurality of vehicles, resulting that the system may allow each individual vehicle detecting the respective at least one data set at the respective location. The at least one sensor may be integrated in the vehicle, for example, at an outer surface of the vehicle chassis. Alternatively or additionally, the at least one sensor may be arranged in the interior of the vehicle as an internal sensor.

For example, the at least one sensor may be integrated in the vehicle at an outer surface of the vehicle chassis. Alternatively or additionally, the at least one sensor may be an internal sensor arranged in the interior of the vehicle. The internal sensor may be an exterior-facing sensor.

With the at least one sensor provided for each of the plurality of the vehicles in the fleet, the at least one data set of the at least one sensor of each individual vehicle of the fleet may be detected, received, collected or gathered, and based on the at least data set from each individual vehicle, environmental factors of each individual vehicle at various locations during the driving may be analysed and evaluated by the evaluation unit of the interface to estimate, report and update, for example, the at least one weather condition surrounding each individual vehicle along the driving route. As such, the interface may be an interactive user interface for the driver or the occupant, as at least the detected one or more data sets and/or the determined respective weather condition at the current location of the vehicle may be displayed for the driver or the occupant by the interface.

In an example, the interface of the system may be configured to modify and display a pre-stored weather condition based on the at least one data set and/or the at least one weather condition surrounding the vehicle.

The system may further comprise a storing unit that may be designed to receive and store a plurality of pre-stored data sets for distant locations, in particular distant locations downstream of the planned travelling route. Once the weather condition for a certain location may be changed or altered over time, the at least one sensor of the vehicle may receive the at least one data set from the at least one sensor and determine the at least one weather condition surrounding the vehicle when driving to the certain location, and the newly detected at least one data set and the newly determined weather condition may be used to refresh or update the pre-stored data set and weather condition. As the at least one sensor and the evaluation unit of vehicle may be in operation continuously or at a predefined time interval, the data sets and the weather conditions may be detected and updated in real-time for the various locations along the travelling route.

In an example, the at least one sensor may comprise one or more sensors from a group comprising a sun load sensor, an exterior temperature sensor, a rain sensor, a wiper activation sensor, an anti-slip activation sensor, an image sensor, a position sensor, a LIDAR sensor, a radar sensor, a humidity sensor and/or a blocked radar sensor.

For example, a wiper activation sensor may be configured to detect the frequency of the wiping activities of the wiper, in order to estimate a precipitation rate of rain or snow. Similarly, the anti-slip activation sensor may be configured to detect slipperiness of the road as a result of rain or snow.

In an example, the evaluation unit may be configured to collect the at least one data set from the at least one sensor. Additionally, the evaluation unit may be configured to determine the at least one weather condition surrounding the vehicle based on the at least one data set by applying an analyzing model and/or to predict the at least one weather condition based on the at least one data set by applying a prediction model.

The light detection and ranging sensor (LIDAR sensor) or the image sensor may be designed to capture an image of the surrounding the vehicle and/or detect a data set of the image of the vehicle at the current location during driving.

The analyzing model and/or the prediction model may be developed and stored in the evaluation unit of the interface of the vehicle. For example, the analyzing model may be designed to selectively collecting, prioritizing and/or omitting certain data sets out of the at least one data set detected from the various sensors. For example, the prediction model may be designed to perform a big data analysis on the data sets of the sensors or weighting the data sets of the sensors for estimating the weather condition for the location surrounding the vehicle.

In an example, the interface may further comprise a communication module, which may be configured to receive the pre-stored weather condition and/or at least one distant weather condition from an external device and/or to send the at least one data set and/or the at least one weather condition surrounding the vehicle to an external device.

In an example, the external device may be a mobile terminal, a server, a second communication module of a second vehicle of the fleet, a cloud system and/or a satellite.

Alternatively or additionally, the evaluation unit may be provided in the centralized server or cloud system. Accordingly, the detected data sets of the sensors may be communicated and evaluated by means of the communication module from the vehicle to the centralized system. In contrast to the localized data evaluation system, by means of which the detected data sets may be evaluated in the vehicle and the resultant weather conditions may then be transmitted to the centralized server or cloud system, the direct transfer of the detected data sets from the vehicle to the centralized server or cloud system may require that the analysing model and the predicting model of the centralized system may be designed to perform a big data analysis.

For example, the communication module may be designed to receive the at least one data set and/or the at least one weather condition at a certain location surrounding the data from a stationary weather station that may provide weather data, for example, via the mobile terminal such as a smartphone, which may be connected to the vehicle or the interface of the vehicle wirelessly. Alternatively, further weather data sets and/or the weather conditions that may be detected, determined and updated in real-time from the other vehicles of the fleet, may be transmitted from the cloud system or the satellite to the communication module of the interface of the system.

Alternatively, the communication module may further allow a vehicle-to-vehicle communication, for example, when the vehicle is driving close enough to the second vehicle of the fleet, so that the weather data sets and/or the weather conditions in the second vehicle may be transmitted directly to the interface of the vehicle.

Simultaneously, the communication module may be designed to transmit the weather data sets or the weather conditions from the vehicle to the second vehicle of the fleet directly using the vehicle-to-vehicle communication, via the cloud system and/or via the satellite. Additionally, the communication module may be designed to provide the weather data sets or the weather conditions of the vehicle to the weather stationary weather station, a weather reporting or predicting facility, a traffic authority and/or a climate research facility.

By sharing the weather data sets and/or the weather conditions among the plurality of the vehicles of the fleet, such as between the first vehicle and the second vehicle, using the system having the various sensors and the interface with the communication module, the system may advantageously make live updated weather data sets and/or weather conditions from millions of relevant measurement points available and accessible and thereby may cover a large area of interest.

In an example, the interface may further comprise a display, which may be configured to visualize the pre-stored weather condition, the at least one distant weather condition from the external device, the at least one data set and/or the modified at least one weather condition surrounding the vehicle on a navigation map.

The display may be an on-board touchscreen display.

The navigation map may be a real-time weather and navigation map, when the navigation map may be designed to display the combined information comprising the pre-stored weather condition, the at least one distant weather condition from the external device, the at least one data set and/or the modified at least one weather condition surrounding the vehicle along with the position date of the vehicle. Moreover, the communication module may be configured to send the at least one data set and/or the at least one weather condition surrounding the vehicle with the position date of the vehicle to the cloud system by means of the communication module, in order to further update or modify the weather and navigation map.

In an example, the communication module of the interface may be configured to send and/or receive a warning signal based on the pre-stored weather condition, the at least one distant weather condition from the external device, the at least one data set and/or the modified at least one weather condition surrounding the vehicle.

Depending on the at least one data set and/or the at least one weather condition surrounding the vehicle and/or the further weather data sets and/or the further weather conditions that are live-updated by the vehicle, the second vehicle and the other vehicles of the fleet, the communication module may determine whether the weather data sets or the weather conditions exceeds a predefined limit value a predefined limit condition. It may also be determined by the communication module whether to send a warning signal or an alerting system to the driver or the occupant of the vehicle via the interface, visually or acoustically. In this way, the system according to the present disclosure may be provided for the safety or risk management system of the vehicle.

In an example, the interface may be configured to calculate a time of arrival based on the pre-stored weather condition, the at least one distant weather condition from the external device, the at least one data set and/or the modified at least one weather condition surrounding the vehicle.

As the weather data sets and the weather conditions may be updated at the location of the vehicle and at the locations of the second and further vehicles of the fleet in real-time along the planned travelling route, the time of the arrival may be calculated precisely based on the respective information.

According to a second aspect, there is provided a vehicle comprising a system according to the present disclosure.

With the system according to the present disclosure, a smart analysis and control system for monitoring and managing the multiple weather-relating sensors of the vehicle may be continuously developed and provided in the vehicle, so that the safety or risk evaluation system for drivers, occupants and pedestrians may be improved during the driving and/or for the route planning.

According to a third aspect, there is provided the use of of a system according to the present disclosure of a vehicle for collecting at least one data set and/or determining at least one weather condition for generating and/or updating a real-time weather and navigation map for a stationary weather station, a weather reporting or predicting facility, a traffic authority, and/or a climate research facility.

According to a fourth aspect, there is provided the use of a system according to the present disclosure for managing a fleet having a plurality of vehicles comprising planning times arrivals of the plurality of vehicles of the fleet and/or modifying routes of the plurality of vehicles in real-time.

According to a fifth aspect, there is provided a method for determining weather conditions in real-time for a vehicle of a fleet. The method comprises the following steps: first, detecting at least one data set by means of at least one sensor arranged in the vehicle; subsequently, receiving the at least one data set of the at least one sensor and/or, based on the at least one data set, determining at least one weather condition surrounding the vehicle by means of an evaluation unit of an interface; finally, visualizing the at least one data set and/or the at least one weather condition surrounding the vehicle by means of an interface.

In an example, the method may further comprise the following steps: receiving a pre-stored weather condition and/or at least one distant weather condition from an external device by means of a communication module; determining, by means of the evaluation unit, the at least one weather condition surrounding the vehicle based on the at least one data set by applying an analyzing model and/or predicting the at least one weather condition based on the at least one data set by applying a prediction model; modifying and displaying the pre-stored weather condition on a navigation map based on the at least one data set and/or the at least one weather condition surrounding the vehicle by means of the interface.

Alternatively and additionally, the method may further comprise the step of sending the at least one data set and/or the at least one weather condition surrounding the vehicle to the external device.

According to a sixth aspect, there is provided a computer program element for a system according to the present disclosure, which, when being executed by a processing element of a vehicle, is adapted to perform the method steps of the fifth aspect.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

It should be noted that the above examples may be combined with each other irrespective of the aspect involved. Accordingly, the method may be combined with structural features and, likewise, the apparatus and the system may be combined with features described above with regard to the method.

These and other aspects of the present disclosure will become apparent from and elucidated with reference to the examples described hereinafter.

Examples of the disclosure will be described in the following with reference to the following drawings.
- Fig. 1: shows schematically an example of a system for determining weather conditions for a vehicle of a fleet according to the present disclosure.
- Fig. 2: shows schematically a flow chart illustrating a method for determining weather conditions for a vehicle of a fleet according to the present disclosure.
- Fig. 3a: shows schematically an example of an interface of a system according to the present disclosure.
- Fig. 3b: shows schematically an example of an interface of a system according to the present disclosure.

The figures are merely schematic representations and serve only to illustrate examples of the disclosure. Identical or equivalent elements are in principle provided with the same reference signs.

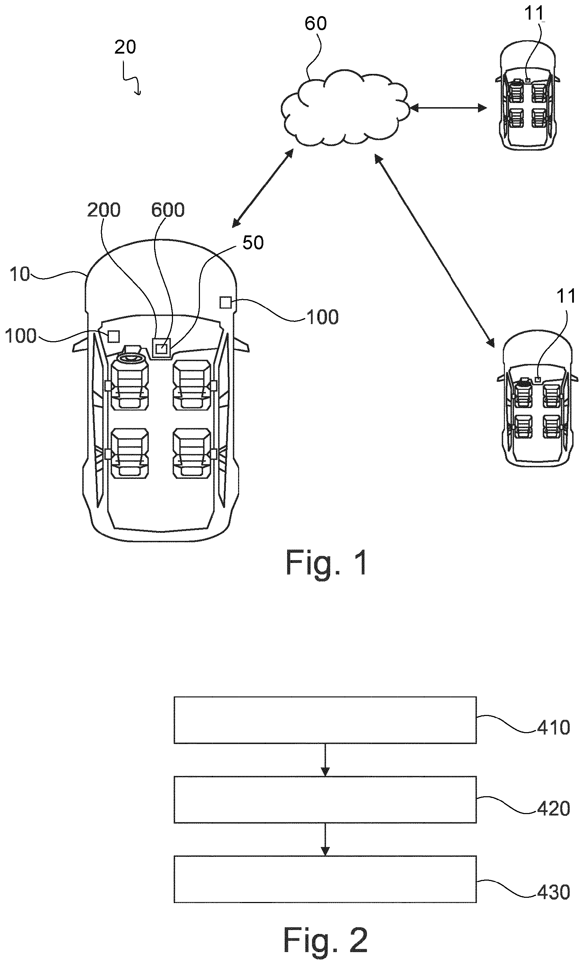

Figure 1 shows a system 50 for determining weather conditions in real-time for a vehicle 10 of a fleet 20. The system 50 comprises at least one sensor 100 and an interface 200 that comprises an evaluation unit.

The at least one sensor 100 may be arrangeable at the vehicle 10 and configured to detect at least one data set. For example, the at least one sensor 100 may be integrated in the vehicle 10 at an outer surface of the vehicle chassis. Alternatively or additionally, the at least one sensor 100 may be an internal sensor arranged in the interior of the vehicle 10.

The at least one sensor 100 may comprise one or more sensors that may be selected from a group comprising a sun load sensor, an exterior temperature sensor, a rain sensor, a wiper activation sensor, an anti-slip activation sensor, an image sensor, a position sensor, a LIDAR sensor, a radar sensor, a humidity sensor and/or a blocked radar sensor. The sensors 100 may be provided or equipped in the vehicle 10 for detecting weather conditions.

The evaluation unit of the interface 200 may be configured to receive the at least one data set of the at least one sensor 100 and/or to determine, based on the at least one data set, at least one weather condition surrounding the vehicle 10. In particular, the evaluation unit may be configured to collect the at least one data set from the at least one sensor 100. Further, the evaluation unit being configured to determine the at least one weather condition surrounding the vehicle 10 based on the at least one data set by applying an analyzing model and/or to predict the at least one weather condition based on the at least one data set by applying a prediction model.

The interface 200 may be configured to visualize the at least one data set and/or the at least one weather condition surrounding the vehicle 10. Moreover, the interface 200 may be configured to modify and display a pre-stored weather condition based on the at least one data set and/or the at least one weather condition surrounding the vehicle 10.

The system 50 may further comprise a processing element, which may be designed to execute a computer program element for the system 50 for performing method steps shown in Fig. 2.

The fleet 20 may comprise a plurality of vehicles, including the vehicle 10 and a second vehicle 11.

The interface 200 may further comprise a communication module, which may be configured to receive the pre-stored weather condition and/or at least one distant weather condition from an external device and/or to send the at least one data set and/or the at least one weather condition surrounding the vehicle 10 to an external device. The external device may be a mobile terminal, a server, a second communication module of the second vehicle 11 of the fleet 20, a cloud system 60 and/or a satellite.

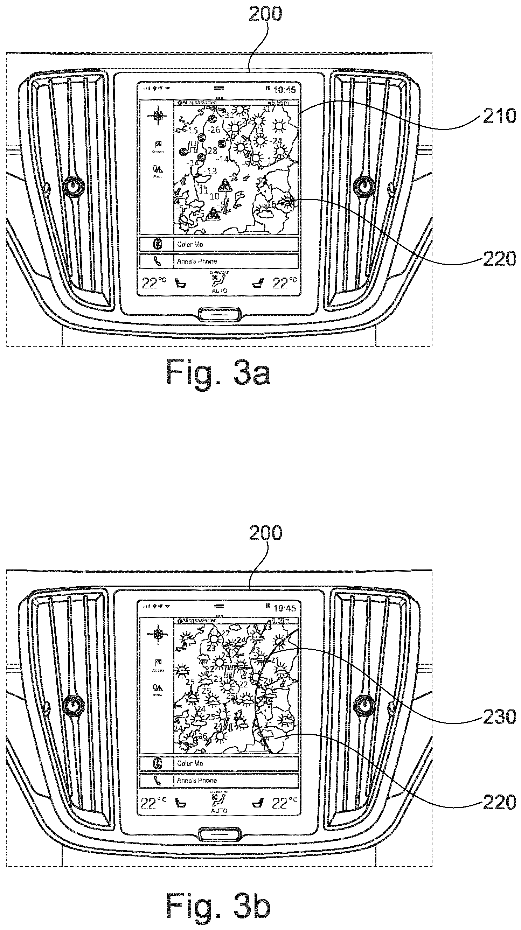

For example, the at least one distant weather condition may be detected or determined by the second sensor 11, which may be travelling or located at a different place from the sensor 10. In particular, the second sensor 11 may be travelling downstream along a planned route 230 of the vehicle 10 as shown in Fig. 3b.

The communication module of the interface 200 may allow the cloud system 60 collecting and exchanging the at least one data set and/or the at least one weather condition from the plurality of vehicles 10, 11 of the fleet 20 travelling and located at differently distant locations. Also, the communication module may allow the cloud system 60 transmitting or sending the pre-stored weather condition from a distant location for estimating a time of arrival and planning a route 230.

In addition, the communication module of the interface 200 may be configured to send and/or receive a warning signal based on the pre-stored weather condition, the at least one distant weather condition from the external device, the at least one data set and/or the modified at least one weather condition surrounding the vehicle 10.

The interface 200 may further be configured to calculate a time of arrival based on the pre-stored weather condition, the at least one distant weather condition from the external device, the at least one data set and/or the modified at least one weather condition surrounding the vehicle 10 and/or to display a position date of the vehicle 10.

Fig. 3a and Fig. 3b show, respectively, an interface 200 of the vehicle 10, which comprises a display 210. On the display 210, a navigation map 200 may be displayed, so that the pre-stored weather condition, the at least one distant weather condition from the external device, the at least one data set and/or the modified at least one weather condition surrounding the vehicle 10 may be visualized.

The display 210 may be a touchscreen display. The display 210 or the touchscreen display may further be configured to visualize a real-time weather and navigation map 220, as shown in Fig. 3b, by combining the at least one data set and/or the modified at least one weather condition surrounding the vehicle 10, one or more distant weather conditions at distant locations downstream along the route 230 of the vehicle 10 from the cloud system 60, the position data of the vehicle 10, the estimated time of arrival in the real-time weather and navigation map 220.

Fig. 2 shows a flow chart illustrating a method for determining weather conditions in real-time for a vehicle 10 of a fleet. The method starts at step 410 where at least one data set may be detected by means of at least one sensor 100 arranged in the vehicle 10; at a further step 420, the at least one data set of the at least one sensor 100 may be received, and/or, based on the at least one data set, at least one weather condition surrounding the vehicle 10 may be determined by means of an evaluation unit of an interface 200. At step 430, the at least one data set and/or the at least one weather condition surrounding the vehicle (10) may be visualized by means of the interface 200.

In addition to the above described method steps, a pre-stored weather condition and/or at least one distant weather condition may be received from an external device by means of a communication module at an additional step. At a further step, the at least one weather condition surrounding the vehicle 10 may be determined, by means of the evaluation unit, based on the at least one data set by applying an analyzing model and/or the at least one weather condition may be predicted based on the at least one data set by applying a prediction model. At a further step, the pre-stored weather condition may be modified and displayed on a navigation map 220 based on the at least one data set and/or the at least one weather condition surrounding the vehicle 10 by means of the interface 200. Alternatively or additionally, at a further step, the at least one data set and/or the at least one weather condition surrounding the vehicle 10 may be sent to the external device.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 11: second vehicle
- 20: fleet
- 50: system for determining weather conditions
- 60: cloud system
- 100: at least one sensor
- 200: interface
- 210: display
- 220: navigation map
- 230: routes
- 600: processing element
- 410: step of detecting at least one data set
- 420: step of receiving at least one data set and determining at least one weather condition
- 430: step of visualizing at least one data set and/or at least one weather condition

## Claims

1. A system (50) for determining weather conditions in real-time for a vehicle (10) of a fleet (20), comprising:
at least one sensor (100);
an interface (200) comprising
an evaluation unit;
the at least one sensor (100) being arrangeable at the vehicle (10) and configured to detect at least one data set;
the evaluation unit of the interface (200) being configured to receive the at least one data set of the at least one sensor (100) and/or, based on the at least one data set, to determine at least one weather condition surrounding the vehicle;
the interface (200) being configured to visualize the at least one data set and/or the at least one weather condition surrounding the vehicle (10).

2. The system (50) according to claim 1,
the interface (200) being configured to modify and display a pre-stored weather condition based on the at least one data set and/or the at least one weather condition surrounding the vehicle (10).

3. The system (50) according to claim 1 or 2,
the at least one sensor (100) comprising one or more sensors from a group comprising a sun load sensor, an exterior temperature sensor, a rain sensor, a wiper activation sensor, an anti-slip activation sensor, an image sensor, a position sensor, a LIDAR sensor, a radar sensor, a humidity sensor and/or a blocked radar sensor.

4. The system (50) according to one of the preceding claims,
the evaluation unit being configured to collect the at least one data set from the at least one sensor (100); and
the evaluation unit being configured to determine the at least one weather condition surrounding the vehicle (10) based on the at least one data set by applying an analyzing model and/or to predict the at least one weather condition based on the at least one data set by applying a prediction model.

5. The system (50) according to one of the preceding claims:
the interface (200) further comprising a communication module;
the communication module being configured to receive the pre-stored weather condition and/or at least one distant weather condition from an external device and/or to send the at least one data set and/or the at least one weather condition surrounding the vehicle (10) to an external device.

6. The system (50) according to claim 5,
the external device being a mobile terminal, a server, a second communication module of a second vehicle (11) of the fleet (20), a cloud system (60) and/or a satellite.

7. The system (50) according to claim 5 or 6,
the interface (200) further comprising a display (210),
the display (210) being configured to visualize the pre-stored weather condition, the at least one distant weather condition from the external device, the at least one data set and/or the modified at least one weather condition surrounding the vehicle (10) on a navigation map (220) .

8. The system (50) according to one of the claims 5 to 7,
the communication module of the interface (200) being configured to send and/or receive a warning signal based on the pre-stored weather condition, the at least one distant weather condition from the external device, the at least one data set and/or the modified at least one weather condition surrounding the vehicle (10).

9. The system (50) according to one of the preceding claims,
the interface (200) being configured to calculate a time of arrival based on the pre-stored weather condition, the at least one distant weather condition from the external device, the at least one data set and/or the modified at least one weather condition surrounding the vehicle (10).

10. A vehicle (10) comprising a system (50) according to one of the claims 1 to 9 for determining weather conditions in real-time in a fleet (20).

11. Use of a system (50) according to one of claims 1 to 10 of a vehicle (10) according to claim 10 for collecting at least one data set and/or determining at least one weather condition for generating and/or updating a real-time weather and navigation map (220) for a stationary weather station, a weather reporting or predicting facility, a traffic authority, and/or a climate research facility.

12. Use of a system (50) according to one of claims 1 to 9 for managing a fleet (20) having a plurality of vehicles (10) comprising planning times arrivals of the plurality of vehicles of the fleet (20) and/or modifying routes (230) of the plurality of vehicles in real-time.

13. A method for determining weather conditions in real-time for a vehicle (10) of a fleet (20), the method comprising:
detecting (410) at least one data set by means of at least one sensor (100) arranged in the vehicle (10);
receiving (420) the at least one data set of the at least one sensor (100), and/or, based on the at least one data set, determining at least one weather condition surrounding the vehicle (10) by means of an evaluation unit of an interface (200);
visualizing (430) the at least one data set and/or the at least one weather condition surrounding the vehicle (10) by means of the interface (200).

14. The method according to claim 13, the method further comprising the steps of:
receiving a pre-stored weather condition and/or at least one distant weather condition from an external device by means of a communication module;
determining, by means of the evaluation unit, the at least one weather condition surrounding the vehicle (10) based on the at least one data set by applying an analyzing model and/or predicting the at least one weather condition based on the at least one data set by applying a prediction model;
modifying and displaying the pre-stored weather condition on a navigation map (220) based on the at least one data set and/or the at least one weather condition surrounding the vehicle (10) by means of the interface (200); and/or
sending the at least one data set and/or the at least one weather condition surrounding the vehicle (10) to the external device.

15. A computer program element, for a system (10) according to any of claims 1 to 9, which, when being executed by a processing element (600) of a vehicle (10), being configured to perform the method steps of the method claim 13 or 14.

## Amended claims

### Amended claims in accordance with Rule 137(2) EPC.

1. A system (50) for determining weather conditions in real-time for a vehicle (10) of a fleet (20), comprising:
a plurality of sensors(100);
an interface (200) comprising
an evaluation unit;
the plurality of sensors (100) being arrangeable at the vehicle (10) and configured to detect at least one data set;
**characterized in that**
the evaluation unit of the interface (200) being configured to receive the at least one data set of the sensors (100) and/or, based on the at least one data set, to determine at least one weather condition surrounding the vehicle by applying an analysing model, configured to selectively collect, prioritize and/or omit certain data sets out of the at least one data set detected by the sensors (100), and/or to predict the at least one weather condition by applying a prediction model, configured to perform a big data analysis on the data sets of the sensors or weight the data sets of the sensors (100) for estimating the weather condition for the location surrounding the vehicle (10);
the interface (200) being configured to visualize in real-time the at least one data set and/or the at least one weather condition surrounding the vehicle (10).

2. The system (50) according to claim 1,
the interface (200) being configured to visualize in real-time the at least one data set and/or the at least one weather condition surrounding the vehicle (10) by updating a pre-stored data set and/or a pre-stored weather condition based on the at least one data set and/or the at least one weather condition surrounding the vehicle (10).

3. The system (50) according to claim 1 or 2,
the plurality of sensors (100) comprising sensors from a group comprising a sun load sensor, an exterior temperature sensor, a rain sensor, a wiper activation sensor, an anti-slip activation sensor, an image sensor, a position sensor, a LIDAR sensor, a radar sensor, a humidity sensor and/or a blocked radar sensor.

4. The system (50) according to one of the preceding claims:
the interface (200) further comprising a communication module;
the communication module being configured to receive the pre-stored weather condition and/or at least one distant weather condition from an external device and/or to send the at least one data set and/or the at least one weather condition surrounding the vehicle (10) to an external device.

5. The system (50) according to claim 4,
the external device being a mobile terminal, a server, a second communication module of a second vehicle (11) of the fleet (20), a cloud system (60) and/or a satellite.

6. The system (50) according to claim 4 or 5,
the interface (200) further comprising a display (210) ,
the display (210) being configured to visualize the pre-stored weather condition, the at least one distant weather condition from the external device, the at least one data set and/or the modified at least one weather condition surrounding the vehicle (10) on a navigation map (220) .

7. The system (50) according to one of the claims 4 to 6,
the communication module of the interface (200) being configured to send and/or receive a warning signal based on the pre-stored weather condition, the at least one distant weather condition from the external device, the at least one data set and/or the modified at least one weather condition surrounding the vehicle (10).

8. The system (50) according to one of the preceding claims,
the evaluation unit of the interface (200) being configured to calculate a time of arrival based on the pre-stored weather condition, the at least one distant weather condition from the external device, the at least one data set and/or the modified at least one weather condition surrounding the vehicle (10).

9. A vehicle (10) comprising a system (50) according to one of the claims 1 to 8 for determining weather conditions in real-time in a fleet (20).

10. Use of a system (50) according to one of claims 1 to 9 of a vehicle (10) according to claim 10 for collecting at least one data set and/or determining at least one weather condition for generating and/or updating a real-time weather and navigation map (220) for a stationary weather station, a weather reporting or predicting facility, a traffic authority, and/or a climate research facility.

11. Use of a system (50) according to one of claims 1 to 8 for managing a fleet (20) having a plurality of vehicles (10) comprising planning times arrivals of the plurality of vehicles of the fleet (20) and/or modifying routes (230) of the plurality of vehicles in real-time.

12. A method for determining weather conditions in real-time for a vehicle (10) of a fleet (20), the method comprising:
detecting (410) at least one data set by means of a plurality of sensors (100) arranged in the vehicle (10);
receiving (420) the at least one data set of the plurality of sensors (100), and/or, based on the at least one data set, determining at least one weather condition surrounding the vehicle (10) by means of an evaluation unit of an interface (200) by applying an analysing model, configured to selectively collect, prioritize and/or omit certain data sets out of the at least one data set detected by the sensors (100), and/or predicting the at least one weather condition by applying a prediction model, configured to perform a big data analysis on the data sets of the sensors or to weight the data sets of the sensors (100) for estimating the weather condition for the location surrounding the vehicle (10);
visualizing (430) the at least one data set and/or the at least one weather condition surrounding the vehicle (10) by means of the interface (200).

13. The method according to claim 12, the method further comprising the steps of:
receiving a pre-stored data set and/or a pre-stored weather condition and/or at least one distant weather condition from an external device by means of a communication module;
updating the pre-stored data set and/or a pre-stored weather condition the pre-stored weather condition on a navigation map (220) based on the at least one data set and/or the at least one weather condition surrounding the vehicle (10) by means of the interface (200); and/or
sending the at least one data set and/or the at least one weather condition surrounding the vehicle (10) to the external device.

14. A computer program element, for a system (10) according to any of claims 1 to 8, which, when being executed by a processing element (600) of a vehicle (10), being configured to perform the method steps of the method claim 12 or 13.
